# EUROPÄISCHE PATENTSCHRIFT

(11) **EP 2 218 491 B1**
(45) Veröffentlichungstag und Bekanntmachung des Hinweises auf die Patenterteilung: **04.04.2012**
(21) Anmeldenummer: 10151413.1
(22) Anmeldetag: 22.01.2010
(51) Int. Cl.: B01D 53/04, F02M 25/08

(54) **Filtereinrichtung zur Kohlenwasserstoffadsorption**
Filter device for hydrocarbon adsorption
Dispositif de filtre destiné à l'adsorption d'hydrocarbures

(30) Priorität: 03.02.2009 DE 102009007312
(43) Veröffentlichungstag der Anmeldung: 18.08.2010
(73) Patentinhaber: Mahle International GmbH, 70376 Stuttgart (DE)
(72) Erfinder: Wilhelm, Dietmar, 75446, Wiernsheim (DE)
(74) Vertreter: Jooß, Martin

(56) Entgegenhaltungen:
- EP-A1- 1 702 662
- EP-A2- 0 889 229
- US-A- 5 653 788
- US-A- 5 830 349
- US-A- 5 858 227
- US-A1- 2006 196 823
- US-B1- 6 843 377

## Beschreibung

Die vorliegende Erfindung betrifft eine Filtereinrichtung zur Kohlenwasserstoffadsorption, insbesondere eine Luftfiltereinrichtung wie sie z.B. in der US-A-5 653 788 oder US-A-2007/0119306 offenbart ist.

Luftfiltereinrichtungen, insbesondere im Bereich einer Tankentlüftung, sind hinlänglich bekannt und dienen zur Adsorption von Kohlenwasserstoffen vor deren Entweichen in die Umgebung. Zur Kohlenwasserstoffadsorption werden hier insbesondere aktivkohlehaltige Filterelemente eingesetzt, die mittels eines Rückspülvorgangs regeneriert werden können. Der Rückspülvorgang wird dabei von einer kommunizierend mit der Filtereinrichtung verbundenen Brennkraftmaschine bewirkt, sodass die beim Rückspülen ausgespülten Kohlenwasserstoffanteile der Brennkraftmaschine zugeführt und dort verbrannt werden können.

Nachteilig bei gängigen Luftfiltereinrichtungen ist jedoch, dass bei entsprechenden Druckunterschieden zwischen der zur Brennkraftmaschine und der zum Kraftstofftank führenden Leitung unterschiedlich hohe Kohlenwasserstoffanteile in die Brennkraftmaschine eingetragen werden und sich dadurch eine exakte Motorsteuerung erschwert. Zugleich erfolgt eine Be- und Endladung von bekannten Filtereinrichtungen üblicherweise in Axialrichtung, was eine gewisse Bauhöhe erfordert.

Die vorliegende Erfindung beschäftigt sich mit dem Problem, für eine Filtereinrichtung eine verbesserte oder zumindest eine andere Ausübungsform anzugeben, mit welcher sich einerseits eine Motorsteuerung vereinfachen lässt und welche andererseits kompakt baut ist.

Dieses Problem wird erfindungsgemäß durch den Gegenstand des unabhängigen Anspruchs 1 gelöst. Vorteilhafte Ausführungsformen sind Gegenstand der abhängigen Ansprüche.

Die Erfindung beruht auf dem allgemeinen Gedanken, bei einer Filtereinrichtung zu Kohlenwasserstoffadsorption mit einem Filtergehäuse, in welchem wenigstens ein Aktivkohle aufweisendes Filterelement angeordnet ist, eine strukturierte Endscheibe vorzusehen, die einerseits gegen das Filterelement vorgespannt ist und die andererseits zusammen mit dem Filterelement und dem Filtergehäuse eine Kanalstruktur bildet, die einen radialen Einlass von Kohlenwasserstoff beladener Luft sowie zumindest einen davon getrennten und nur über das Filterelement verbundenen axialen Auslass aufweist. Zu diesem Zweck ist die erfindungsgemäße Endscheibe üblicherweise höher ausgebildet als bisher bekannte Endscheiben, ermöglicht es aufgrund ihrer Kanalstruktur jedoch einen seitlichen Einlass oder einen seitlichen Auslass zu realisieren, sodass nicht sowohl der Auslass als auch der Einlass an einer Axialseite, das heißt an einer Stirnseite, der Endscheibe angeordnet werden müssen. Der Begriff Ein- und Auslass kann im Normalbetrieb und im Rückspülbetrieb selbstverständlich angepasst werden, so dass sich auch ein Auslass seitlich der Endscheibe befinden kann. Durch den seitlichen Einlass, respektive Auslass, strömt somit die mit Kohlenwasserstoffen beladene Luft in die Einlasskanäle der Endscheibe und wird in diesen je nach Ausbildung verteilt. Über die Einlasskanäle strömt die mit Kohlenwasserstoffen beladene Luft durch das Filterelement hin zu den Auslasskanälen und von diesen zum axialen Auslass in der Endscheibe. Zwischen den Einlasskanälen und den Auslasskanälen besteht dabei keine direkte Verbindung, d. h. es ist kein Kurzschluss möglich, sodass eine Verbindung zwischen den Einlasskanälen und den Auslasskanälen ausschließlich über das Filterelement und die darin enthaltene Aktivkohle möglich ist. Hierdurch kann auch eine interne Pufferung von Kohlenwasserstoffdämpfen erreicht werden, mit welcher insbesondere eine vereinfachte Motorsteuerung ermöglicht wird, da ein aus der Filtereinrichtung in Richtung der Brennkraftmaschine ausgetragener Kohlenwasserstoffdampf üblicherweise ein konstantes Gemisch darstellt.

Bei einer vorteilhaften Weiterbildung der erfindungsgemäßen Lösung, ist die Endscheibe aus Kunststoff, insbesondere als Kunststoffspritzgussteil, ausgebildet. Kunststoffspritzgussteile können äußerst flexibel und mit geringen Stückkosten hergestellt werden, wobei eventuell auftretende konstruktive Änderungen durch eine einfache Anpassung des Spritzgusswerkzeugs möglich sind.

Bei einer weiteren vorteilhaften Ausführungsform der erfindungsgemäßen Lösung, ist zwischen dem Filterelement und der Endscheibe ein Filterwerkstoff, insbesondere ein Vlies, angeordnet. Dieser Filterwerkstoff ist zumindest bereichsweise gasdicht mit einer axialen und dem Filterelement zugewandten Stirnseite der Endscheibe verbunden, insbesondere verschweißt oder verklebt, wodurch ein genau definierter, im Wesentlichen radial verlaufender Pufferabstand zwischen den Einlasskanälen und den Auslasskanälen in der Endscheibe vorgegeben ist. Über die Länge dieses Pufferabstandes ist der mit Kohlenwasserstoffen beladene Kraftstoffdampf gezwungen durch das Filterelement, das heißt durch die Aktivkohle, zu strömen, wodurch eine genau festgelegte Mindestdiffusionsstrecke im Filterelement definiert werden kann.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Bauteile beziehen.

Dabei zeigen, jeweils schematisch,
- Fig. 1: eine Schnittdarstellung durch eine erfindungsgemäße Filtereinrichtung,
- Fig. 2: eine Schnittdarstellung durch eine Endscheibe entlang der Schnittebene A-A,
- Fig. 3: eine Schnittdarstellung durch eine Endscheibe entlang der Schnittebene B-B.

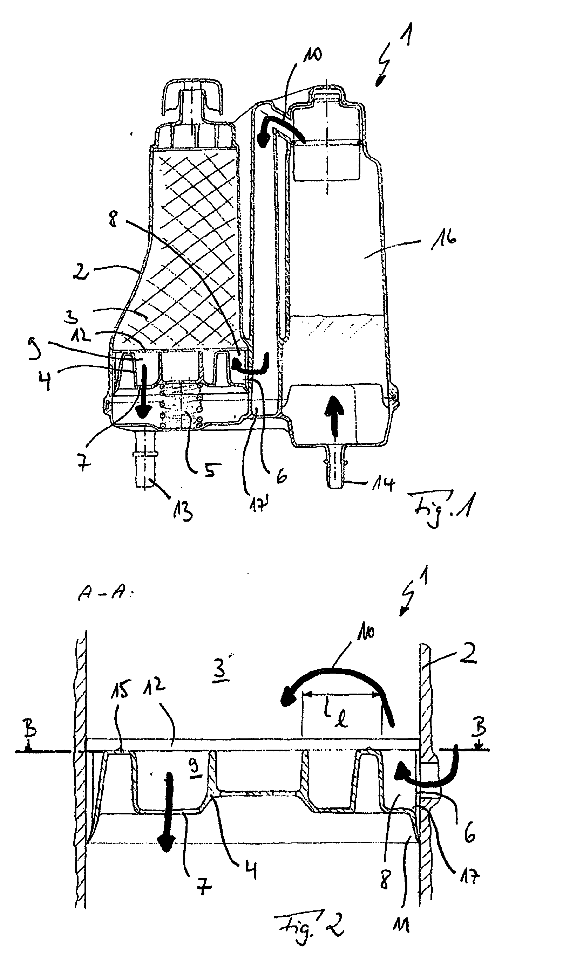

Entsprechend der Figur 1, weist eine erfindungsgemäße Filtereinrichtung 1 ein Filtergehäuse 2 auf, in welchem wenigstens ein aktivkohleaufweisendes Filterelement 3 angeordnet ist. Zumindest einen Ends, gemäß der Figur 1 unten, ist in dem Filtergehäuse 2 eine Endscheibe 4 vorgesehen, welche mittels einer Federeinrichtung 5 gegen das Filterelement 3 vorgespannt ist. Betrachtet man nun insbesondere die Figur 2, so kann man erkennen, dass die Endscheibe 4 zusammen mit dem Filterelement 3 und dem Filtergehäuse 2 eine Kanalstruktur bildet, die einen radialen Einlass 6 und zumindest einen davon getrennten und nur über das Filterelement 3 verbundenen axialen Auslass 7 aufweist. Mit dem

Einlass 6 verbunden sind Einlasskanäle 8 (vgl. Figur 2), wobei in gleicher Weise mit dem Auslass 7 Auslasskanäle 9 kommunizierend verbunden sind. Gemäß der Figur 1 ist dabei eine Strömungsrichtung eines mit Kohlenwasserstoffen beladenen Luftstroms mittels Strömungspfeile 10 angedeutet. Prinzipiell ist klar, dass die Strömungsrichtung auch umgekehrt sein kann, so dass aus dem Einlass 6 ein Auslass 7 wird und umgekehrt.

Betrachtet man insbesondere die Figur 2, so kann man erkennen, dass die Endscheibe 4 eine mit dem Filtergehäuse 2 zusammenwirkende Dichtkontur 11, insbesondere in der Art einer Dichtlippe, aufweist die den Einlass 6 und den Auslass 7 strömungstechnisch voneinander trennt. Die Dichtkontur 11 kann dabei zusammen mit dem Filtergehäuse 2 eine Kraftstofffalle 17 bilden, in welcher sich Kraftstoff ansammelt und bei einem Rückspülvorgang ausgetragen werden kann. Die Dichtkontur 11 bildet dabei vorzugsweise einen integralen Bestandteil der Endscheibe 4 und ist entweder an diese angespritzt oder einstückig mit dieser ausgebildet. Vorzugsweise ist dabei die Dichtkontur 11 aus demselben Werkstoff, beispielsweise Kunststoff, ausgebildet, wie die Endscheibe 4. Zwischen dem Filterelement 3 und der Endscheibe 4 ist ein Filterwerkstoff 12, insbesondere in der Art eines Vlieses, angeordnet. Der Filterwerkstoff 12 ist dabei mit einer axialen Stirnseite der Endscheibe 4 verbunden, insbesondere im Bereich 15 mit dieser verklebt oder verschweißt. Auf Grund des bevorzugten Schweißverfahrens, des Vibrationsschweißens, mit dem das Vlies, respektive der Filterwerkstoff 12, an der Endscheibe 4 befestigt, wird ist nur eine gewisse Höhe der Endscheibe 4 möglich. Es ist zwar technisch möglich fast jede Form der Endscheibe 4 zu realisieren, allerdings sind nicht alle Geometrien für das Vibrationsschweißverfahren geeignet. Dargestellt ist eine dahingehend optimierte Endscheibe 4.

Die erfindungsgemäße Filtereinrichtung 1 kann beispielsweise im Bereich einer Tankentlüftung angeordnet werden, weist einerseits einen Motoranschluss 13 und andererseits einen Tankanschluss 14 auf. Zwischen den Einlasskanälen 8 und den Auslasskanälen 9 ist die mit Kraftstoff beladene Luft gezwungen, sowohl durch den Filterwerkstoff 12 als auch durch das Filterelement 3 zu strömen und zwar zumindest auf einer Länge 1, die als Pufferabstand I bezeichnet wird. Der Pufferabstand I beträgt dabei zumindest 12 mm, vorzugsweise sogar größer als 15 mm. Durch eine entsprechende Struktur der Endscheibe 4 ist nicht nur eine seitliche Einleitung der Kraftstoffdämpfe und eine axiale Ausleitung möglich, sondern zugleich auch ein nahezu frei wählbares Anordnen der Einlasskanäle 8 und der Auslasskanäle 9.

Ein Vorteil dieser Anordnung ist, dass die Federeinrichtung 5, die das Aktivkohlegranulat zusammendrückt und vor dem Zerreiben bewahrt, aus billigeren Metallen hergestellt werden kann, weil sie nicht mehr auf der Frischluftseite der Filtereinrichtung 1 angeordnet werden muss und somit nicht mehr der Korrosion durch Feuchtigkeit ausgesetzt ist. Durch die erfindungsgemäße Zufuhr der Kohlenwasserstoffdämpfe in der Seitenwand der Endscheibe 4 ist die Federeinrichtung 5 vor der Luftfeuchtigkeit geschützt. Idealerweise wird die Filtereinrichtung 1 senkrecht stehend eingebaut, da dann die Schwerkraft als zusätzliche Kraft genützt werden kann, um die Kohlenwasserstoffe in der Filtereinrichtung 1 zu halten und dadurch die gesetzlichen Grenzwerte einzuhalten. Zudem ist bei einer aufrechten Einbauweise mit Frischluftanschluss am oberen Ende des Filterelements 3, dieses und der Frischluftanschluss besser gegen Spritzwasser geschützt. Bei Bedarf kann die Filtereinrichtung 1 auch leicht schräg eingebaut werden. Jedoch muss dann der radiale Einlass 6 so angeordnet sein, dass der Kraftstoff, der eventuell dort in Tropfen vorkommt, abfliesen kann.

Damit beim Spülen des Filterelementes 3 nicht die Luft aus dem Kraftstofftank abgesaugt wird, befindet sich oberhalb des Ausperlbehälters 16 ein Ventil.

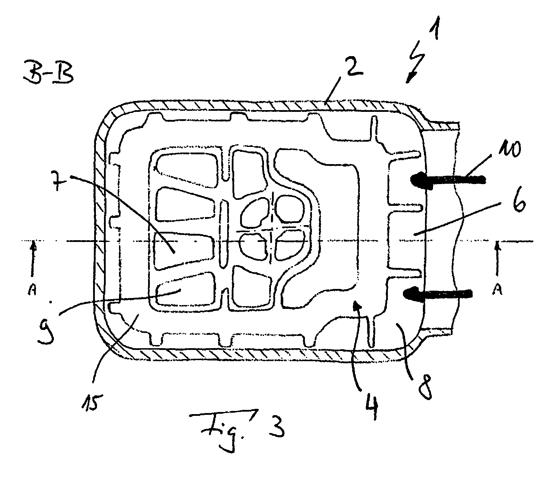

Betrachtet man die Figur 3, so kann man erkennen, dass der Kraftstoffdampf über den Einlass 6 in die Endscheibe 4 einströmt und von dort in das darüber liegende Filterelement 5 verteilt wird. Von den Einlasskanälen 8 getrennt sind die Auslasskanäle 9 sowie der Auslass 7, über welchen die Filtereinrichtung 1 mit einer Brennkraftmaschine, beispielsweise einem Verbrennungsmotor eines Kraftfahrzeuges, verbunden ist. Gemäß der Darstellung in der Figur 3 ist deutlich ein Bereich 15 zwischen den Einlasskanälen 8 und den Auslasskanälen 9 zu erkennen, in welchen der Filterwerkstoff 12 mit der Endscheibe 4 verbunden, beispielsweise verklebt ist.

Auf der rechten Seite gemäß der Figur 1 kann die Filtereinrichtung 1 noch einen so genannten Ausperlbehälter 16 aufweisen, in welchen sich Kraftstoffkondensat sammeln und ggf. auch wieder ablaufen kann. Zwischen dem Ausperlbehälter 16 und dem Einlass 6 ist eine weitere Kraftstofffalle 17' vorgesehen, in welcher sich ebenfalls Kraftstoff sammeln kann, zumindest bis zu einem Rückspülvorgang.

Die Anordnung der Anschlüsse 13, 14 und der verschiedenen Kammern der Filtereinrichtung 1 nach Fig. 1 sind so angeordnet, dass im Ausperlbehälter 16 ausperlender Kraftstoff nach unten abfließen kann, bzw. auf Grund der Schwerkraft sich unten sammelt und somit in den Tank zurückfliesen kann. Da es besser ist, dass der Frischlufteinlass sich vor Spritzwasser geschützt ist und der Ausperlbehälter 16 aufrecht stehen sollte, benötigt man als Überleitung vom Ausperlbehälter 16 zum Filterelement 5 einen Überleitungskanal. Der bei dieser Anordnung zu gleich als zusätzliche Kraftstofffalle 17'dient. Der sich darin einsammelnde Kraftstoff verdampft nach und nach so dass kein Ablass zum Tank notwendig ist.

Mit der erfindungsgemäßen Filtereinrichtung 1 lässt sich eine Motorsteuerung durch eine exakt vorher bestimmbare Gemischbildung vereinfachen, da ein Kurzschluss zwischen dem Einlass 6 und dem Auslass 7 nicht mehr möglich ist. Vielmehr wird stets ein gewisser Anteil an Kohlenwasserstoffen im Filterelement 3 gespeichert, das heißt gepuffert, wodurch bei einem Betrieb der Brennkraftmaschine ein dieser zugeführtes Gemisch vergleichmäßigt werden kann. Zugleich ermöglicht ein seitlicher Einlass 6 in die Endscheibe 4 bisher nicht vergleichbare Ausführungsformen und Konstruktionen, wodurch die Filtereinrichtung 1 insbesondere kompakter gebaut werden kann.

## Patentansprüche

1. Filtereinrichtung (1) zur Kohlenwasserstoffadsorption, insbesondere eine Luftfiltereinrichtung,
- mit einem Filtergehäuse (2), in welchem wenigstens ein Aktivkohle aufweisendes Filterelement (3) angeordnet ist,
- mit einer Endscheibe (4), die gegen das Filterelement (3) vorgespannt ist,
- wobei die Endscheibe (4) auf der Filterelementseite zusammen mit dem Filterelement (3) und dem Filtergehäuse (2) eine Kanalstruktur bildet,
die Kanalstruktur zumindest einen Einlasskanal (8) aufweist, wobei der gehäuse kommuniziert, und zumindest einen davon getrennten und nur über das Filterelement (3) verbundenen Auslasskanal (9) aufweist, wobei der zumindest eine Auslasskanal (9) mit einem axialen Auslass (7) in der Endscheibe kommuniziert.

2. Filtereinrichtung nach Anspruch 1,
**dadurch gekennzeichnet,**
**dass** die Endscheibe (4) eine mit dem Filtergehäuse (2) zusammenwirkende Dichtkontur (11) aufweist, die den radialen Einlass (6) und den Auslass (7) auf der dem Filterelement (3) gegenüber liegenden Seite der Endscheibe (4) voneinander trennt.

3. Filtereinrichtung nach Anspruch 1 oder 2,
**dadurch gekennzeichnet,**
**dass** zwischen dem Filterelement (3) und der Endscheibe (4) ein Filterwerkstoff (12), insbesondere ein Vlies, angeordnet ist.

4. Filtereinrichtung nach Anspruch 3,
**dadurch gekennzeichnet,**
**dass** der Filterwerkstoff (12) mit der Endscheibe (4) verbunden, insbesondere verklebt oder verschweißt, ist.

5. Filtereinrichtung nach einem der Ansprüche 1 bis 4,
**dadurch gekennzeichnet,**
**dass** die Filtereinrichtung (1) im Bereich einer Tankentlüftung angeordnet ist.

6. Filtereinrichtung nach einem der Ansprüche 2 bis 5,
**dadurch gekennzeichnet,**
**dass** die Dichtkontur (11) zusammen mit dem Filtergehäuse (2) auf der Kanalstrukturseite der Endscheibe eine Kraftstofffalle (17) bildet.

7. Filtereinrichtung nach einem der Ansprüche 1 bis 6,
**dadurch gekennzeichnet,**
**dass** ein Pufferabstand (I), das heißt ein im Wesentlichen radialer Abstand zwischen dem zumindest einen Einlaß kanal (8) und dem zumindest einen auslass kanal (9), über welchen ein Kohlenwasserstoffdampf durch das Filterelement (3) strömen muss, zumindest 12 mm beträgt.

## Claims

1. A filter device (1) for hydrocarbon adsorption, in particular an air filter device,
- having a filter housing (2) in which at least one filter element (3) containing activated carbon is arranged,
- having an end plate (4) that is pretensioned against the filter element (3),
- wherein the end plate (4) located on the side of the filter element forms together with the filter element (3) and the filter housing (2) a canal structure,
- the canal structure having at least one inlet canal (8), wherein the at least one inlet canal (8) corresponds with a radial inlet (6) in the filter element, and having at least one discharge canal (9) separated therefrom and connected exclusively via the filter element (3), wherein the at least one discharge canal (9) corresponds with an axial discharge (7) in the end plate.

2. The filter device as specified in claim 1,
**characterised in that**
the end plate (4) has a sealing contour (11) that works together with the filter housing (2) and that separates the radial inlet (6) and the discharge (7) located on the side of the end plate (4) opposing the filter element (3) from one another.

3. The filter device as specified in claim 1 or claim 2,
**characterised in that**
a filter material (12), in particular a fleece, is arranged between the filter element (3) and the end plate (4).

4. The filter device as specified in claim 3,
**characterised in that**
the filter material (12) is connected to the end plate (4), in particular adhered or welded.

5. The filter device as specified in any one of the claims 1 to 4,
**characterised in that**
the filter device (1) is arranged in the region of a tank vent.

6. The filter device as specified in any one of the claims 2 to 5,
**characterised in that**
the sealing contour (11) forms together with the filter housing (2) located on the side of the canal structure of the end plate a fuel trap (17).

7. The filter device as specified in any one of the claims 1 to 6,
**characterised in that**
a buffer space (I), that is to say a substantially radial distance between the at least one inlet canal (8) and the at least one discharge canal (9), by means of which a hydrocarbon vapour must flow through the filter element (3), consists of at least 12 mm.

## Revendications

1. Dispositif de filtre (1) destiné à l'absorption d'hydrocarbures, notamment dispositif de filtre à air,
- comportant un logement de filtre (2), dans lequel au moins un élément de filtre (3) présentant un charbon actif est disposé,
- comportant une rondelle d'extrémité (4), qui est précontrainte contre l'élément de filtre (3),
- dans lequel la rondelle d'extrémité (4) sur le côté d'élément de filtre forme conjointement à l'élément de filtre (3) et au logement de filtre (2) une structure de canaux, la structure de canaux présente au moins un canal d'admission (8), dans lequel le au moins un canal d'admission (8) communique avec une admission radiale (6) dans le logement de filtre, et présente au moins un canal d'échappement (9) séparé de celui-ci et relié seulement par l'intermédiaire de l'élément de filtre (3), dans lequel le au moins un canal d'échappement (9) communique avec un échappement axial (7) dans la rondelle d'extrémité.

2. Dispositif de filtre selon la revendication 1,
**caractérisé en ce que**
la rondelle d'extrémité (4) présente un contour d'étanchéité (11) coopérant avec le logement de filtre (2), qui sépare l'une de l'autre l'admission radiale (6) et l'échappement (7) sur le côté situé en vis-à-vis de l'élément de filtre (3) de la rondelle d'extrémité (4).

3. Dispositif de filtre selon les revendications 1 ou 2,
**caractérisé en ce que**
entre l'élément de filtre (3) et la rondelle d'extrémité (4) un matériau filtrant (12), notamment un voile non tissé, est disposé.

4. Dispositif de filtre selon la revendication 3,
**caractérisé en ce que**
le matériau filtrant (12) est relié à la rondelle d'extrémité (4), notamment collé ou soudé.

5. Dispositif de filtre selon une des revendications 1 à 4,
**caractérisé en ce que**
le dispositif de filtre (1) est disposé au niveau d'une purge de réservoir.

6. Dispositif de filtre selon une des revendications 2 à 5,
**caractérisé en ce que**
le contour d'étanchéité (11) forme un piège à carburant (17) conjointement au logement de filtre (2) sur le côté de structure de canaux de la rondelle d'extrémité.

7. Dispositif de filtre selon une des revendications 1 à 6,
**caractérisé en ce que**
un écartement de tampon (I), c'est-à-dire un écartement essentiellement radial entre le au moins un canal d'admission (8) et le au moins un canal d'échappement (9), par l'intermédiaire duquel une vapeur d'hydrocarbures doit s'écouler à travers l'élément de filtre (3), correspond au moins à 12 mm.
